# EUROPÄISCHE PATENTSCHRIFT

(11) **EP 1 599 396 B1**
(45) Veröffentlichungstag und Bekanntmachung des Hinweises auf die Patenterteilung: **31.10.2007**
(21) Anmeldenummer: 04715882.9
(22) Anmeldetag: 01.03.2004
(51) Int. Cl.: B65G 9/00, B62D 65/00, B61B 3/00, B65D 19/44, B65G 1/04

(54) **VORRICHTUNG ZUM TRANSPORTIEREN UND/ODER AUFBEWAHREN VON STÜCKGUT**
DEVICE FOR TRANSPORTING AND/OR STORING PIECE GOODS
DISPOSITIF POUR TRANSPORTER ET/OU CONSERVER UN ARTICLE ISOLÉ

(30) Priorität: 28.02.2003 DE 10309127
(43) Veröffentlichungstag der Anmeldung: 30.11.2005
(73) Patentinhaber: Conteyor Multibag Systems N.V., 9820 Merelbeke (BE)
(72) Erfinder: VAN BREE, Jos, NL-4554 BD Westdorpe (NL)
(74) Vertreter: Weber, Roland
(86) Internationale Anmeldenummer: PCT/EP2004/002042
(87) Internationale Veröffentlichungsnummer: WO 2004/076318

(56) Entgegenhaltungen:
- WO-A1-97/24269
- FR-A1- 2 667 849
- FR-A1- 2 776 624

## Beschreibung

Die Erfindung betrifft eine Vorrichtung zum Transportieren und/oder Aufbewahren von Stückgut mit einer zusammenlegbaren Bahn aus flexiblem Material, zum Beispiel Gewebematerial, die unter Bildung wenigstens einer im wesentlichen U-förmigen Aufnahmetasche zusammengelegt ist, in welcher das Stückgut aufnehmbar ist, und mit einer am oberen Ende der Tasche angeordneten Aufhängeeinrichtung, die wenigstens eine mit dem oberen Ende der Tasche verbindbare und sich in Längsrichtung über die Länge der Tasche hinweg erstreckende Tragestange aufweist, deren Enden in an einem Rahmen befestigten Haltemitteln gehaltert sind, wobei die wenigstens eine Tragestange mit Mitteln zum verschiebbaren Führen der Aufnahmetasche in einer ersten Richtung ausgebildet ist.

Eine Vorrichtung gemäß dem Oberbegriff des Anspruchs 1 oder 20 ist aus der WO 97/24269 A1 bekannt. So sind zum Beispiel U-förmige Aufnahmetaschen bekannt, in denen Stückgüter transportiert werden, insbesondere gleichartige Stückgüter, die als Fertigteile oder als Bauteile oder Halbfertigteile für die Produktion und Montage komplexerer Gegenstände benötigt werden. Ein Beispiel hierfür sind Karosserieteile in der Automobilindustrie, die zum Beispiel in einer von der Montagefabrik für die Autos weiter entfernten Karosserieteilefabrik gestanzt und geformt werden und dann erst an den Montageort transportiert werden müssen.

Viele Stückgüter sind gegen Beschädigungen empfindlich und werden daher mit Aufnahmetaschen der vorstehend beschriebenen Art transportiert. Dieses Transportieren kann auf unterschiedlichen Wegen und mit unterschiedlichen Systemen erfolgen. So muß bei einigen Stückgütern, welche für die Weiterverarbeitung oder Montage hergestellt werden, der Belade- und Entladevorgang möglichst vereinfacht und beschleunigt werden. Man sollte möglichst nicht jedes Einzelteil in einem eigenen Behälter verpacken und anschließend wieder zeitaufwendig entnehmen müssen, weil dadurch der Produktionsprozeß zum Beispiel eines Automobiles erheblich verteuert würde. Zu dieser Verteuerung trägt unter Umständen auch das recht teuere Verpackungsmaterial bei.

Die in den Aufnahmetaschen transportierten Stückgüter können die unterschiedlichsten Formen haben. Bekannte Transportvorrichtungen werden so eingesetzt, daß in einem Rahmen oder Behälter jeweils eine Reihe identischer Gegenstände in den einzelnen, hintereinander angeordneten Taschen aufgenommen ist. Dies schließt selbstverständlich nicht aus, daß zum Beispiel auch abwechselnd unterschiedliche Gegenstände in den Taschen angeordnet werden.

Wie beim Stand der Technik ist auch die Bedeutung des hier verwendeten Begriffes "Rahmen" weit zu fassen. Darunter fallen alle Arten von offenen und geschlossenen Gestellen oder Rahmen, einschließlich geschlossener Boxen oder Kästen, die nur aus Seitenwänden und Boden und/oder Dekke bestehen. Weiterhin ist auch der Begriff des "flexiblen Materials" sehr weit gefaßt und umfaßt Folien ebenso wie Gewebe, Netze und einzelne, parallel nebeneinander angeordnete Streifen aus Folien- oder Gewebematerial oder aus Schnüren. Es ist bekannt, ein solches flexibles Material an zwei Tragestangen aufzuhängen, wobei das an den zwei benachbarten Stangen aufgehängte Material in Form einer Schlaufe unter Bildung der genannten Aufnahmetasche nach unten durchhängt. Stirnseitig kann die Aufnahmetasche gemäß der Erfindung offen oder geschlossen sein. Die Taschen können auch mit Hilfe eines - wahlweise elastischen - Bandes verschließbar sein, so daß die beiden gegenüberliegenden Teile einer Aufnahmetasche an den Stirnseiten zusammengehalten werden. Das flexible Material, d.h. die zusammenlegbare Bahn, kann sich vorzugsweise zwischen zwei benachbarten Tragestangen erstrecken. Alternativ kann sich die zusammenlegbare Bahn aber auch über drei Tragestangen erstrecken, so daß eine Reihe von zusammenhängenden Schlaufen oder mehreren Aufnahmetaschen gebildet werden. Die erfindungsgemäße Vorrichtung ist auch für zwei oder drei nebeneinander angeordnete und auf diese Weise gebildete, U-förmige Aufnahmetaschen anwendbar.

Wenn eine Reihe von hintereinander angeordneten Aufnahmetaschen der eingangs bezeichneten Vorrichtung in einem Rahmen mit daran befestigten Haltemitteln, zum Beispiel Schienen, angeordnet werden, kann man mehrere Rahmen auf einem Lkw verladen und diese dann in die Fabrikationsstätte transportieren. Dort müssen die Rahmen in die Fabrik geschafft und sequentiell Vorrichtung für Vorrichtung entladen und den einzelnen Bearbeitungsstationen zugeführt werden. Hierbei ist es einfach, wenn die Entladerichtung nur eine einzige Richtung ist und umgekehrt nach dem Entnehmen des jeweiligen Stückgutes auch die Station für die Wiederverwendung in einer einzigen Position liegt, so daß auch die Entnahmerichtung nur eine einzige Richtung ist. Durch die komplizierten Montagearbeiten ergibt es sich aber häufig, daß die Transportvorrichtungen mit den Aufnahmetaschen sequentiell in unterschiedliche Richtungen transportiert, bewegt bzw. verschoben werden müssen. Das ist mit den bisherigen Transportvorrichtungen mit Aufnahmetaschen nicht möglich.

Zwar hat man schon Transportvorrichtungen mit Gewebebahnen geschaffen, bei welchen eine größere Anzahl von U-förmigen Aufnahmetaschen durch schlaufenförmiges Falten nebeneinander geschaffen wird. Man kann dann zwar mehrere Transportvorrichtungen mit Aufnahmetaschen gleichzeitig bestücken, lagern und transportieren, d.h. in einem Rahmen befördern und diesem auch wieder entnehmen, wiederum ist aber eine Bestückung eines solchen Rahmens aus unterschiedlichen Richtungen und auch eine Entnahme in unterschiedliche Richtungen ausgeschlossen. Dies erschwert die Flexibilität der Transportsysteme und damit letztlich auch der Verknüpfung der verschiedenen Bearbeitungsstationen miteinander.

Es ist daher Aufgabe der vorliegenden Erfindung, eine Vorrichtung der eingangs genannten Art zu schaffen, mit welcher die Aufnahmetasche von dem Benutzer der Vorrichtung leichter bewegt und gelagert werden kann.

Diese Aufgabe wird durch die Merkmale des Anspruchs 1 oder 20 gelöst.

Betrachtet man eine erste, nämlich die einfachste Ausführungsform der Transportvorrichtung, dann ist die Aufnahmetasche durch schlaufenförmiges Falten um nur eine einzige Tragestange geschaffen, wobei im oberen Bereich der Aufnahmetasche wieder eine Halteschlaufe durch eine Längsnaht gebildet ist und die eine Tragestange durch diese Halteschlaufe längs hindurch gesteckt ist. Darunter schließt sich die eigentliche Aufnahmetasche an, die stirnseitig beschickt werden kann. Die einfachste Ausführungsform ist eine im Querschnitt kreisförmige Tragestange, die an ihren Enden auf eine Länge abgeschnitten ist derart, daß jedes Ende auf einer Schiene als Haltemittel ruht. Dadurch kann man die Aufnahmetasche in einer Richtung bewegen. An der Tragestange ist oben wenigsten eine Verdickung als Haltemittel zum verschiebbaren Führen der Aufnahmetasche angebracht. Dadurch kann man die Aufnahmetasche in jede beliebige Richtung verschieben.

Eine andere Ausführungsform der Erfindung ist dadurch gekennzeichnet, daß die Mittel zum verschiebbaren Führen der Aufnahmetasche in wenigstens zwei unterschiedliche Richtungen an den Enden der wenigsten Tragestange vorgesehen sind. Dabei ist es besonders vorteilhaft, wenn erfindungsgemäß die Aufhängeeinrichtung wenigstens zwei Tragestangen aufweist. Wie man in den Figuren 1 und 2 sowie auch in den Figuren 3 und 4 erkennen kann, sind die Enden der Tragstangen 6 entweder als Gleithaken 8 ausgebildet oder sie sind mit Querrollen 9 versehen, während die Längsrollen 11 in einem gewissen Abstand von den Enden der Tragstangen an diesen angebracht sind.

Der Benutzer der Vorrichtung mit der Aufnahmetasche kann diese nicht nur in einer Richtung bewegen bzw. verschieben, sondern auch in eine zweite oder möglicherweise eine dritte Richtung. Das bedeutet eine geschicktere Handhabung der Aufnahmetasche, die sowohl beim Beladen als auch beim Entladen von aus verschiedenen Richtungen kommenden Bahnen in abstromige oder Abnahmebahnen bewegen kann, die entweder zu ersteren und/oder zu sich selbst in unterschiedlicher Richtung verlaufen. Dabei ist es gleichgültig, ob diese Bahnen geradlinig oder gekrümmt sind. Wichtig ist an der Umsetzstelle, daß man von einem Führungs- oder Bahnensystem eine einfache Aufnahmetasche mit einfacher Aufhängeeinrichtung leicht umsetzen kann. Die erfindungsgemäße Vorrichtung soll vorzugsweise in einem sequentiellen System eingesetzt werden, bei welchem Aufnahmetaschen in einer Reihe oder Folge hintereinander aus einem System herausgenommen und in ein anderes weitergeben werden. Das "leichtere" Bewegen kann unter anderem auch im Hinblick auf das Gewicht verstanden werden. Die neue Transportvorrichtung kann durch ihre einfache Aufhängeeinrichtung mit gewichtsmäßig leichten Materialien hergestellt werden, so daß das Gesamtgewicht für den Bedienungsmann leicht zu handhaben ist.

Aus Gewichtsgründen ist es bevorzugt, die Transportvorrichtung gemäß der Erfindung mit nur einer U-förmigen Aufnahmetasche zu versehen, um die gesamte Vorrichtung leicht und volumenmäßig klein zu halten. Dabei hängt die aus der zusammenlegbaren Bahn flexiblen Materials gebildete Aufnahmetasche über jeweils eine kleine Halteschlaufe, durch welche die Tragestangen längs hindurch gesteckt sind. Bei einer anderen Ausführungsform könnte man auch zwei U-förmige Aufnahmetaschen nebeneinander anordnen und über eine dritte parallel und dazwischen angeordnete Tragestange zwei Aufnahmetaschen in Form von zwei unten geschlossenen, U-förmigen Schlaufen bilden, wobei die Bahn über die mittlere Tragestange schlaufenförmig gelegt und damit von dieser gehalten wird. Es ist dabei auch zweckmäßig, die zusammenlegbare Bahn aus sehr flexiblem Material herzustellen, damit der Endbenutzer die Transportvorrichtung gut lagern, leicht bewegen und bequem handhaben kann. Es versteht sich, daß die U-förmigen Taschen nicht nur aus einer einzigen Bahn bestehen müssen, sondern insbesondere auch aus mehreren flexiblen Elementen zusammengesetzt sein können, wie z.B. zwei vertikalen Bahnen, die am unteren Ende über eine dritte, quer verlaufende Bahn, die angenäht, angeklebt oder angeschweißt ist, verbunden sind. Des weiteren kann im unteren Bereich der Taschen eine Verstärkungsschicht eingelegt sein oder der Boden der Taschen kann doppelwandig ausgebildet sein, so daß eine Verstärkungsschicht, z.B. ein halb steifes Kunststoffelement, eingeschoben werden kann, welches die beiden vertikalen herabhängenden Seitenwände der Taschen in einem gewissen Abstand voneinander hält.

Bei der Vorrichtung gemäß Anspruch 1 stehen die zwei Verschieberichtungen der Aufnahmetaschen senkrecht aufeinander. Man kann sich gut vorstellen, daß am Umsetzknoten eine ankommende gerade Bahn zum Beispiel aus zwei Schienen oder zwei Stangen gebildet ist, die parallel und im Abstand verlaufen, während ablaufseitig im Abstand von ersteren ebenfalls eine aus zwei Schienen oder Stangen gebildete Bahn senkrecht dazu abläuft. Nimmt man eine horizontale Ebene senkrecht zum Lot.an, dann kann man sich vorstellen, daß die zwei Schienen oder Stangen der jeweiligen Bahn ebenfalls eine Ebene aufspannen. Diese Ebene muß nicht exakt in der Horizontalen liegen, dieses ist aber bevorzugt. Die zulaufseitige Ebene der Bahn ist dabei vorzugsweise parallel zu der ablaufseitigen Ebene der anderen Bahn. Dem steht nicht entgegen, daß die beiden Bahnen senkrecht aufeinander stehen.

Weiterhin ist bei einer anderen Ausführungsform der Abstand der beiden Tragestangen fest und durch je eine im Bereich des Stangenendes angeordnete Querstange bestimmt. Damit ist die Öffnung der Aufnahmetasche von oben definiert. Die Querstange bildet Teil der Aufhängeeinrichtung, die wie ein Rahmen die zusammenlegbare Bahn taschenförmig oben offen hält. Man könnte allerdings die Querstange auch teleskopartig verstellbar und dann arretierbar so gestalten, daß der Abstand der beiden Tragestangen voneinander zwar fest aber vor dem Arretieren variabel ist. Dabei versteht es sich übrigens auch, daß die Aufnahmetasche an den Längsenden (vorn und hinten) wenigstens teilweise geschlossen ist.

Vorteilhaft ist die Erfindung weiter dadurch ausgestaltet, daß die Mittel zum verschiebbaren Führen der Aufnahmetasche in einer Richtung an den Endbereichen der Tragestangen angebrachte, nach unten offene Gleithaken aufweisen. Vorstehend wurde bereits erwähnt, daß die Bahnen aus zwei im Abstand voneinander laufenden zulaufseitigen Stangen bzw. ablaufseitigen Stangen (oder bei einer anderen Ausführungsform Schienen) gebildet sind. Auf diesen Stangen können wie bei Aktenordnern in einer Hängeregistratur nach unten offene Gleithaken verschieblich gleiten. Der Bedienungsmann braucht dann nur die Aufnahmetasche auf der Stange um den gewünschten Abstand zu verschieben. Dieses verschiebbare Führen in der einen Richtung läßt sich mit Y-Richtung beschreiben, eine Richtung, die senkrecht zur Längserstreckung der Tragestangen verläuft.

Da gemäß der Grundidee der Erfindung die Aufnahmetasche in wenigstens zwei unterschiedliche Richtungen, vorzugsweise gerade Richtungen, vorgesehen ist, ist eine weitere Ausführungsform dadurch gekennzeichnet, daß die Mittel zum verschiebbaren Führen der Aufnahmetasche in einer Richtung, in diesem Falle der X-Richtung, an den Endbereichen der Querstangen angebrachte, nach unten offene Gleithaken aufweisen. Die eine zulaufseitige Bahn kann zum Beispiel aus zwei parallelen Stangen gebildet sein, und die andere, ablaufseitige Bahn, ist bei dieser Ausführungsform dann ebenfalls aus zwei Stangen gebildet. Ohne daß man die Aufnahmetasche um den Winkelbetrag, um welchen die Bahnen bzw. Verschieberichtungen verwinkelt sind, verdrehen muß, kann man die Aufnahmetasche direkt von dem zulaufseitigen System auf das ablaufseitige System setzen. Bei diesen Ausführungsformen hat man die Aufnahmetasche über Stangen geschoben und bewegt sie nach dem Umsetzen ebenfalls wieder durch Verschieben auf anderen Stangen. Dafür sind die nach unten offenen Gleithaken zweckmäßig. Für die Y-Richtung sind die Gleithaken an den Enden der Tragestangen angebracht, für die X-Richtung sind die Gleithaken an den Enden der Querstangen angebracht.

Denkbar ist aber auch eine andere Ausführungsform, die dadurch gekennzeichnet ist, daß die Mittel zum verschiebbaren Führen der Aufnahmetasche in einer Richtung, zur besseren Vorstellung kann man an die X-Richtung denken, an den Endbereichen der Querstangen drehbar angeordnete Längsrollen aufweisen. Der Fachmann kann diese Lehre der Erfindung sehr leicht umsetzen, weil die Längsrollen um Achsbolzen drehen, welche in die Querstangen eingelassen werden können. Bei dieser Ausführungsform kann also zum Beispiel in der Y-Richtung über Gleithaken geschoben werden, und in der X-Richtung mit Hilfe der Längsrollen eine Rollverschiebung erfolgen.

Günstig ist es gemäß einer anderen Ausführungsform der Erfindung auch, wenn die Mittel zum verschiebbaren Führen der Aufnahmetasche in einer Richtung, man kann sich hier die Y-Richtung zur leichteren Vorstellung denken, an den Endbereichen der Tragestangen drehbar angeordnete Querrollen aufweisen. Die Querrollen erlauben das rollenartige Verschieben der Aufnahmetasche in Querrichtung, vorzugsweise also senkrecht zur Längsrichtung, welche auch die Längserstreckung der Tragestangen ist. Aus diesem Grunde ermöglichen die Querrollen an den Enden der jeweiligen Tragestangen eine Verschiebeführung in Y-Richtung.

Selbstverständlich ist es auch möglich, daß die Mittel zum verschiebbaren Führen der Aufnahmetasche in beiden Richtungen, hier kann man zur besseren Vorstellung sowohl die X-als auch die Y-Richtung betrachten, nach unten offene Gleithaken aufweisen. In diesem Falle ist die oben schon angedeutete Möglichkeit gegeben, die Aufnahmetasche in beiden Richtungen X, Y über die Gleithaken auf Stangen zu verschieben. Analog ist es weiterhin möglich, daß die Mittel zum verschiebbaren Führen der Aufnahmetasche in beiden Richtungen X, Y an den Tragestangen und den Querstangen drehbar angeordnete Rollen sind. Die Transportvorrichtung kann zu unterschiedlichen Zeiten in zwei unterschiedliche Richtungen verschoben werden. Die Aufhängeeinrichtung kann je nach der oben beschriebenen Ausführungsform vier Rollen und vier Gleithaken oder acht Rollen und acht Gleithaken aufweisen.

Anstelle von Rollen können die Stangen, zum Beispiel die Tragestangen und/oder die Querstangen je ein verdicktes Ende oder eine Einschnürung in kurzem Abstand von ihrem Ende haben, wodurch sich zu den Rollen äquivalente Mittel ergeben.

Aus der vorstehenden Beschreibung dürfte hinsichtlich der Aufnahmetaschen auch ersichtlich sein, daß die Tragestangen das Bahnmaterial so tragen, daß dieses zwischen den Tragestangen Schlaufen als Aufnahmetaschen für das Stückgut bildet. Die Tragestangen der Aufhängeeinrichtung werden über Haltemittel gehaltert und vorzugsweise verschiebbar geführt, welche an einem Rahmen befestigt sind. Dabei handelt es sich um die erwähnten Schienen oder Stangen, die an dem Rahmen angebracht sind. Der Begriff des "Rahmens" ist hier sehr weit gefaßt und umfaßt alle Arten von offenen oder geschlossenen Gestellen, die gegebenenfalls Seitenwände und/oder Boden und/oder Decke haben können, somit also geschlossene Behälter bilden oder auch nur offene Rahmen. Solche Rahmen können in Fabrikationsstätten, auf Lastkraftwagen oder an anderen Orten vorgesehen sein.

Weiterhin ist es günstig, wenn die Enden der Tragstange auf oder in einer Schiene als Haltemittel abgestützt sind. Hierbei brauchen die Enden der Tragstange nicht besonders ausgestaltet oder mit einer Verdickung oder dergleichen versehen zu sein. Die einfachste Version der Transportvorrichtung sieht nur das Hereinschieben der einzigen Tragstange mit der daran hängenden Aufnahmetasche in zwei einander gegenüberliegende Schienen vor. Nimmt man diese Transportvorrichtung aus den Schienen heraus und wünscht man ein Umsetzen in ein anderes Haltemittel für ein Verschieben in einer anderen Richtung, dann wird das andere Verschiebemittel verwendet, welches in der oben schon beschriebenen Weise an der Tragstange oben angebracht ist und eine Verdickung tragen kann, zum Beispiel eine Kugel, die ebenfalls in eine Schiene eingeführt werden kann, wobei diese Schiene in einer anderen Richtung verlaufen kann als die erste Schiene.

Die Erfindung ist weiter vorteilhaft dadurch ausgestaltet, daß die Mittel zum verschiebbaren Führen der Aufnahmetasche in wenigsten zwei unterschiedliche Richtungen Gleithaken, Laufrollen, Verdikkungen oder dergleichen aufweisen.

In einer anderen bevorzugten Ausführungsform der Erfindung ist mindestens eine Querstange zwischen zwei parallelen Tragestangen und im Abstand zu den freien Enden dieser Tragestangen angebracht und verbindet die beiden Tragestangen. Zweckmäßigerweise sind zwei derartige Querstangen beabstandet voneinander irgendwo entlang der beiden parallelen Tragestangen angeordnet, d.h. sie müssen nicht notwendigerweise im Endbereich der Tragestangen sein, sondern können auch in einem Bereich angeordnet werden, der auch von der U-förmigen Tasche erfaßt wird, während die Enden der Tragestangen über die Stirnseiten der U-förmigen Tasche hinausragen.

Darüber hinaus ist vorzugsweise ein Scharnierelement vorgesehen, welches um die Querstange als Scharnierachse drehbeweglich ausgebildet ist. Das Scharnierelement hat vorzugsweise weiterhin eine weitere Öse, durch welche sich eine Achse erstreckt, an der Mittel zum Verschieben der Tragestangen in Längsrichtung derselben angebracht sind. Zweckmäßigerweise handelt es sich dabei um Längsrollen. Die Scharnierelemente können entweder flexible Scharnierelemente sein, die z.B. aus band- oder streifenartigen Elementen bestehen, sie können jedoch auch starre Elemente sein. In der bevorzugten Ausführungsform sind jeweils zwei Scharnierelemente an einer Tragestange im Abstand zueinander angebracht und umfassen mit je einer Scharnieröse die Querstange und sie weisen darüber hinaus eine weitere Öse zum Umfassen der Achse zweier Längsrollen auf.

Die Scharnierelemente können auch noch eine zusätzliche Öse aufweisen, durch welche sich ein Handgriff erstreckt. Die Position der Achse für die Längsrollen und des Handgriffs kann dabei wahlweise ausgetauscht werden, d.h. die neben der Scharnieröse für die Querstange vorgesehenen Ösen können wahlweise entweder für die Achse der Längsrollen oder für einen Handgriff verwendet werden.

Weitere Vorteile, Merkmale und Anwendungsmöglichkeiten der vorliegenden Erfindung ergeben sich aus der folgenden Beschreibung bevorzugter Ausführungsformen in Verbindung mit den anliegenden Zeichnungen. Diese zeigen:

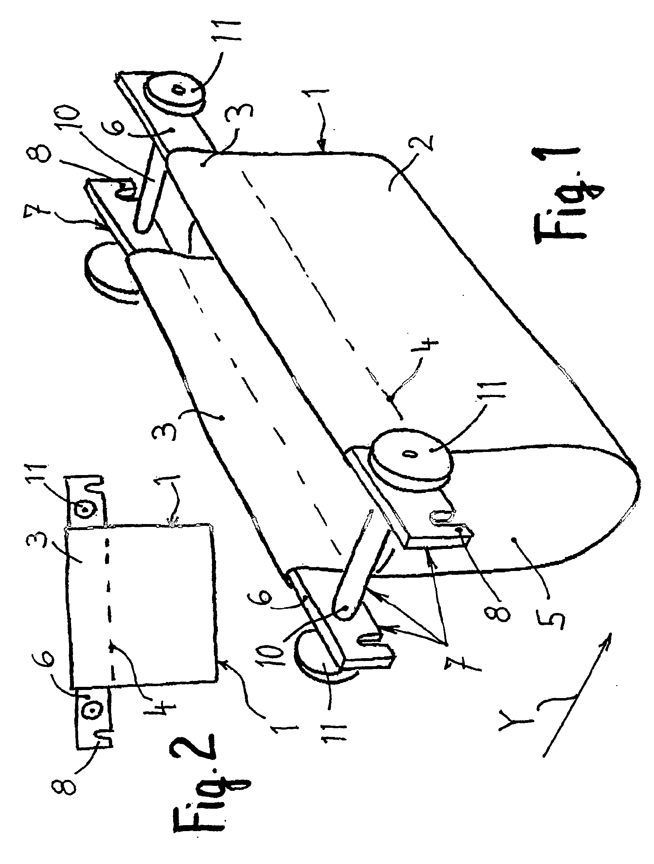

- Figur 1: perspektivisch eine Transportvorrichtung gemäß der Erfindung mit Aufnahmetasche mit oben angeordneter Aufhängeeinrichtung einer bevorzugten ersten Ausführungsform,
- Figur 2: in verkleinertem Maßstab eine Seitenansicht auf die Transportvorrichtung gemäß Figur 1, wenn man in Querrichtung blickt,

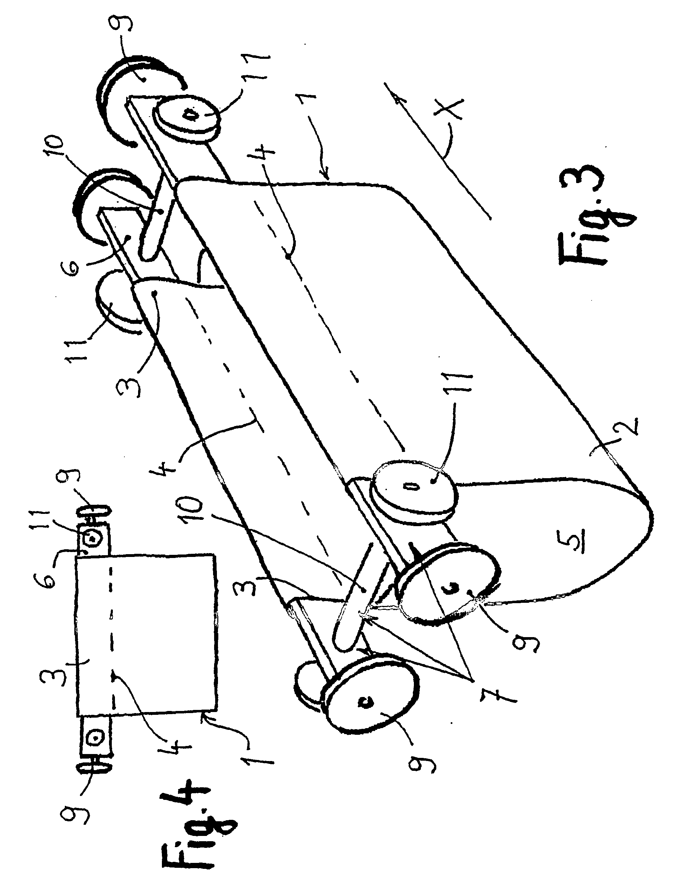

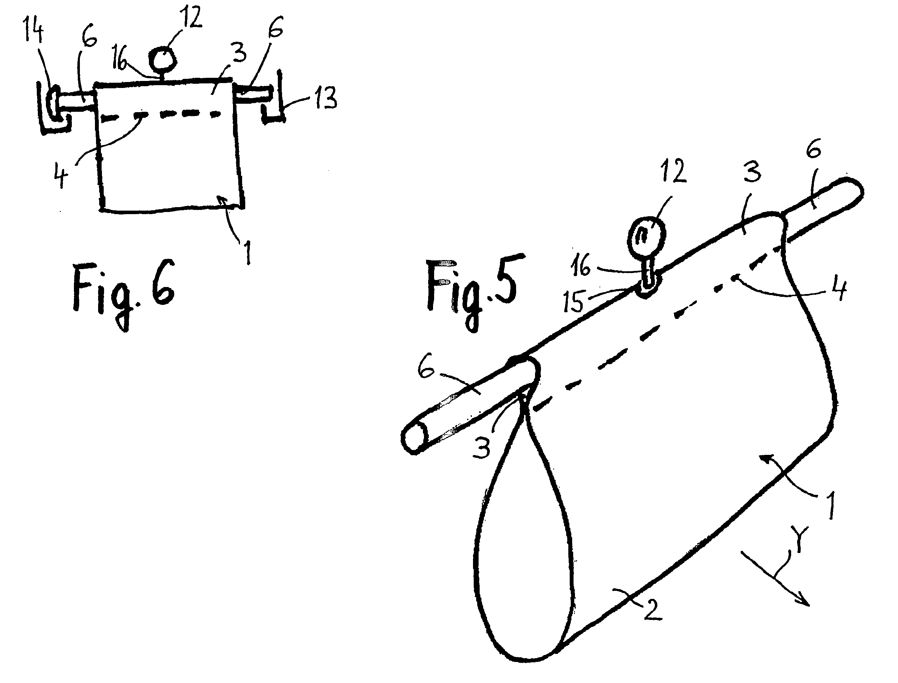

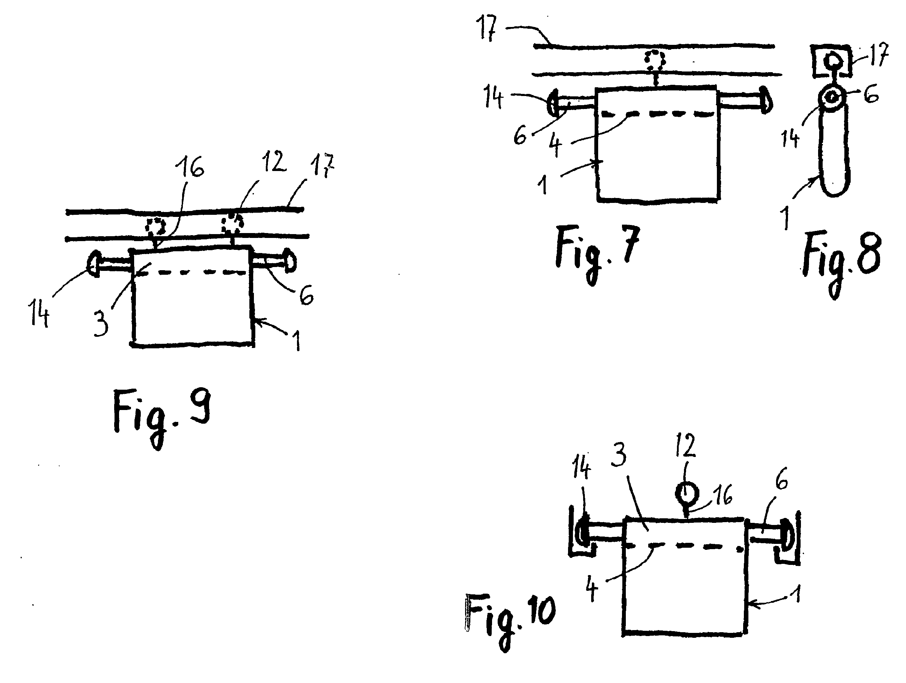

- Figur 3: wiederum perspektivisch eine ähnliche Darstellung wie Figur 1, jedoch von einer anderen Ausführungsform, bei welcher nur Laufrollen und keine Gleithaken vorgesehen sind,
- Figur 4: eine verkleinerte Seitenansicht ähnlich Figur 2, bei welcher jedoch die Gleithaken entsprechend der Ausführungsform nach Figur 3 durch Querrollen ersetzt sind,
- Figur 5: eine ähnliche perspektivische Ansicht wie Figuren 1 und 3, jedoch von einer wesentlich vereinfachten Ausführungsform mit nur einer Tragestange,
- Figur 6: wiederum eine verkleinerte Seitenansicht ähnlich den Figuren 2 und 4, hier jedoch zum einen entsprechend der Ausführungsform der Figur 5, zum anderen mit einander gegenüberliegenden Schienen als Haltemittel und mit einer Verdickung an nur einem Ende der Tragestange,
- Figur 7: eine andere Ausführungsform der Transportvorrichtung, wobei nur eine Tragestange vorgesehen ist, über der sich längs eine Kastenschiene erstreckt, in welcher als Verdikkung eine Kugel läuft, die oben an der Tragestange in deren Mitte befestigt ist,
- Figur 8: eine Seitenansicht, wenn man in Figur 7 beispielsweise von links nach rechts blickt,
- Figur 9: eine ebenfalls verkleinerte Seitenansicht ähnlich Figur 7, wobei jedoch anstelle der einen Kugel zwei im Abstand voneinander angeordnete Kugeln oben an der Tragstange befestigt sind und in der Kastenschiene laufen,
- Figur 10: eine ähnliche Darstellung wie Figur 6, wobei man an beiden Enden der einzigen Tragestange Verdickungen angebracht sieht und in der Mitte nur eine Kugel angebracht ist, und

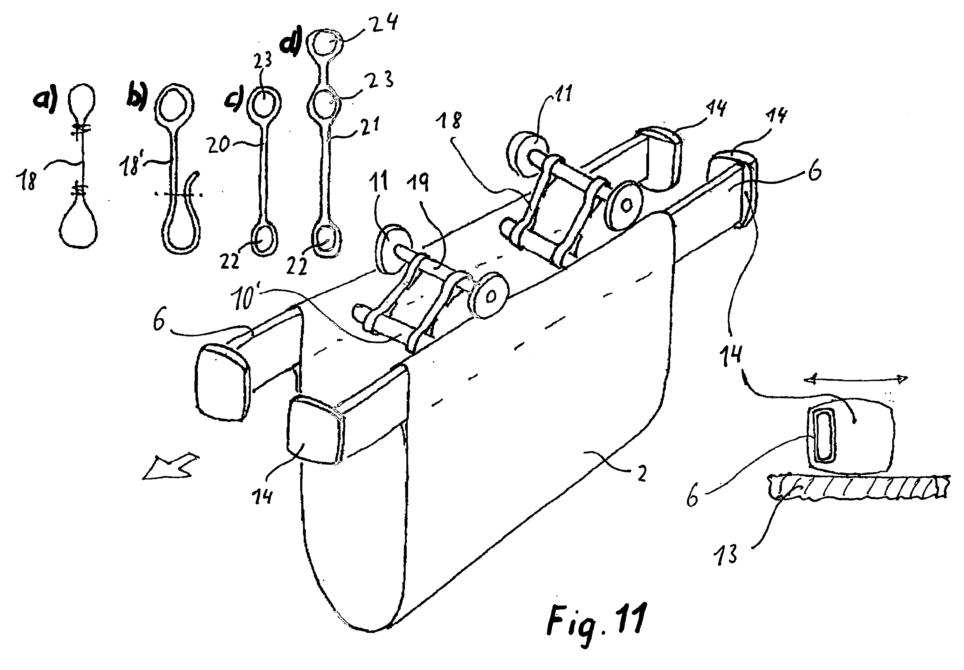

- Figur 11: eine weitere Ausführungsform der Erfindung, welche das Ergreifen und Tragen einer Tasche von Hand zwecks Überführung von einem Schienensystem in ein anderes erleichtern soll.

Die allgemein mit 1 bezeichnete Aufnahmetasche ist durch ein U-förmiges Zusammenlegen der Bahn 2 aus flexiblem Gewebematerial gebildet. An den oberen Enden ist die Bahn ebenfalls zur Bildung von kleinen Halteschlaufen 3 umgelegt und längs der Naht 4 zur Bildung dieser Halteschlaufen 3 vernäht. Die Naht 4 erstreckt sich in Längsrichtung der Aufnahmetasche 1, welche hier die X-Richtung ist. Die Endkanten der Bahn 2 bilden die Enden der Aufnahmetasche 1 und sind durch U-förmige Einsätze 5 so verschlossen, daß die in beschriebener Weise zusammengelegte Bahn 2 eine oben offene Aufnahmetasche 1 bildet.

Durch die sich in Längsrichtung der Aufnahmetasche 1 erstreckenden kleinen Halteschlaufen 3 sind zwei parallel zueinander angeordnete Tragestangen 6 eines Paares von Tragestangen hindurch gesteckt. Die Länge der Tragestangen 6 ist etwas größer als die Länge der Aufnahmetasche 1. Diese Tragestangen 6 gehören zu der allgemein mit 7 bezeichneten Aufhängeeinrichtung, die sich am oberen Ende der Tasche 1 befindet und die Tasche trägt. Jede Tragestange 6 ist in der vorstehend beschriebenen Weise (durch die Halteschlaufe hindurch gesteckt) mit dem oberen Ende der Tasche 1 verbunden.

Die vorderen und hinteren Enden der sich in X-Richtung (Längsrichtung der Tragetasche 1) erstrekkenden Tragestangen 6 sind bei der Ausführungsform der Figuren 1 und 2 mit Gleithaken 8 versehen, die nach unten offen sind. Es handelt sich hier um die Mittel zum verschiebbaren Führen der Aufnahmetasche 1 in Querrichtung, also in die Richtung Y.

Bei der anderen Ausführungsform nach den Figuren 3 und 4 sind die Mittel 9 zum verschiebbaren Führen der Aufnahmetasche 1 in diese eine Richtung Y Querrollen 9, die an den Endbereichen der Tragestangen 6 drehbar angeordnet sind. Die Drehachsen dieser Querrollen 9 verlaufen in Längsrichtung der Tragestangen 6 bzw. in X-Richtung.

Zu der Aufhängeeinrichtung 7 gehören auch die in den Endbereichen der Tragestangen 6 angeordneten Querstangen 10, die senkrecht zur Längserstreckung X der Tragestangen 6 ausgerichtet sind. An den Endbereichen dieser Querstangen 10 sind drehbar Längsrollen 11 angeordnet. Diese Laufrollen werden Längsrollen 11 genannt, weil sie ein Verschieben der Transportvorrichtung aller hier zeichnerisch dargestellten Ausführungsformen in Längsrichtung der Aufnahmetasche 1, d.h. in Richtung X erlauben. Durch die parallel zueinander angeordneten Querstangen 10 wird ein fester Abstand zwischen den beiden Tragestangen 6 vorgegeben.

Es läßt sich bei der Betrachtung der Figuren 1 und 2 einerseits und der Figuren 3 und 4 andererseits gut der Unterschied zwischen den beiden Ausführungsformen der dort jeweils gezeigten Transportvorrichtung erkennen. Die Verschiebebewegung der Aufnahmetasche 1 erfolgt bei der ersten Ausführungsform nach den Figuren 1 und 2 in Y-Richtung, d.h. in der hier sogenannten Querrichtung über nicht dargestellte Stangen, auf welche die nach unten offenen Gleithaken 8 gehängt und über welche die Aufhängevorrichtung 7 durch Gleiten verschoben werden kann. Diese Transportvorrichtung der ersten Ausführungsform kann auf ein Schienensystem durch Einführen in zum Beispiel C-förmige Schienen umgesetzt und wegbewegt werden. Letztere Bewegung in Längsrichtung, d.h. in der sogenannten X-Richtung, erfolgt über die Längsrollen 11, deren Drehachsen in den Querstangen 10 enden.

Bei der zweiten Ausführungsform werden auch wieder für die Verschiebung in der X-Richtung die Längsrollen 11 verwendet; hier aber für die Verschiebung in der Querrichtung, der Richtung Y, die Querrollen 9.

Durch die neue Transportvorrichtung gemäß der Erfindung kann man in den Aufnahmetaschen 1 transportierte Stückgüter gut in einer ersten Schienenrichtung (Zuführrichtung X) von einem Lkw in einen Zwischenrahmen oder ein fabrikationsseitiges weiteres Transportsystem auf die Y-Richtung, zum Beispiel eine Abführrichtung, umsetzen und wegtransportieren und umgekehrt.

In den Figuren 5 bis 10 sind weitere andere und besonders einfach ausgestaltete Ausführungsformen einer Transportvorrichtung gemäß der Erfindung dargestellt. Die ganze Aufhängeeinrichtung besteht nur aus einer einzigen Tragestange 6, die der Einfachheit halber als im Querschnitt kreisförmige Stange dargestellt und an ihren Enden abgeschnitten ist, wie deutlich in Figur 5 zu sehen ist. Blickt man wieder entgegen der Y-Richtung, dann sieht man die verkleinerte Darstellung der Figur 6. Auf der rechten Seite erkennt man dort die abgeschnittene Tragestange 6, die nur auf der Schiene 13 als Haltemittel ruht und geführt ist. Selbstverständlich kann bei jeder Ausführungsform die Tragestange 6 an beiden Seiten entsprechend der Darstellung der Figur 5 abgeschnitten sein. Alternativ könnte man aber auch eine zum Beispiel pilzartige Verdickung 14 an einem oder beiden Enden der Tragstange 6 anbringen, um ein Kippen und Herausfallen der Tragstange 6 mit angehängter Aufnahmetasche 1 zu verhindern. Man erkennt, daß die wenigstens eine Tragestange 6 an ihren Enden zum verschiebbaren Führen ausgebildet ist oder alternativ besondere Mittel aufweist, die oben schon beschrieben wurden, zum Beispiel die pilzartige Verdickung 14 aufweist.

In der Halteschlaufe 3 oben an der Aufnahmetasche 1 ist ein Loch 15 vorgesehen, durch welches ein Stift 16 ragt, an dem oben die Kugel 12 als Verdickung befestigt ist.

Diese Kugel 12 ist als einzige Verdickung in der Längsmitte der Tragestange 6 angebracht. Man kann sich aber auch eine andere Ausführungsform nach Figur 9 vorstellen, in welcher sich zwei Kugeln 12 im Abstand voneinander an der Tragestange 6 befinden, um ein Kippen der Aufnahmetasche 1 zu verhindern. Die eine Kugel 12 oder auch die beiden Kugeln 12 bei der einen bzw. anderen Ausführungsform läuft bzw. laufen in einer Kastenschiene 17, die nur in den Figuren 7 bis 9 dargestellt ist. Die Funktion ist aber einfach und ersichtlich.

Wie bei der Ausführungsform mit den beiden Tragestangen 6 ergeben sich auch für die vereinfachte Ausführungsform mit der nur einen Tragenstange alle Verschiebevorteile der oben beschriebenen Art.

Figur 11 zeigt eine weitere Ausführungsform der Erfindung, bei welcher zwei parallele Tragestangen 6, zwischen denen sich eine U-förmige Tasche erstreckt, durch zwei Querstangen 10' miteinander verbunden sind. Die Querstange 10' wird wiederum umfaßt von jeweils zwei im Abstand zueinander vorgesehenen Scharnierelementen 18, die in diesem Fall als stabile Bänder mit Klettverschlüssen ausgebildet sind, wobei die Bänder jeweils in Form einer Öse um die Querstange 10' herumgelegt werden und an ihrem freien Ende dann wiederum eine Öse bilden, durch welche die Achse 19 zweier Längsrollen 11 geführt ist. Die beiden Längsrollen 11 erstrecken sich in etwa über den Tragestangen 6 oder haben einen etwas größeren Abstand zueinander.

An den Enden der Tragestangen 6 sind jeweils pilzförmige Erweiterungen 14 vorgesehen, die in diesem Fall im wesentlichen als ebene Kopfplatten ausgebildet sind, die an den Enden der Tragestangen 6 angebracht sind. Diese liegen wie einer Detaildarstellung unten rechts in Figur 11 erkennbar ist, auf Schienen 13 auf, die z.B. in Form eines L- oder U-Profils vorgesehen sein können, um ein Abrutschen der Erweiterungen 14 von den Schienen 13 zu verhindern. Wie man sich leicht vorstellen kann, können auf zwei in Abstand zueinander parallel angeordneten Schienen 13 (deren Abstand in etwa der Länge der Tragestangen 6 entspricht) eine ganze Reihe der in Figur 11 dargestellten U-förmigen Taschen hintereinander angeordnet sein und so beispielsweise in einem Rahmenaufbau oder einem Container gehaltert werden, der auf einem LKW transportiert werden kann. Zum Entladen werden dann diese Taschen nacheinander zu dem freien Ende der Schienen bewegt, wobei ein Benutzer die Taschen an den als Handgriffe dienenden Achsen 19 ergreifen und in ein weiteres Schienenpaar einhängen kann, welches senkrecht zu den Schienen 13 verläuft und parallel zu den Tragestangen 6 in einem Abstand, der der Länge der Achse 19 der Längsrollen 11 entspricht, so daß die Längsrollen 11 in diesen Schienen parallel geführt werden. Diese Schienen haben vorzugsweise einen J- oder C-förmigen Querschnitt, so daß die Längsrollen 11 sicher darin geführt werden. Auf diese Weise wird eine derartige Einheit nach der anderen in die Schienen für die Längsrollen 11 eingeschoben, wobei diese Schienen auch geneigt sein können, so daß die Taschen sich selbständig weiterbewegen. Die pilzförmigen Erweiterungen 14 wirken dabei auch als Puffer beim Auftreffen einer nächstfolgenden Tasche auf eine vorangehende Tasche.

In den Teilfiguren a-d der Figur 11 sind verschiedene Formen der Scharnierelemente 18, 18', 20 bzw. 21 dargestellt. Im Falle der Figur 11a ist das Scharnierelement 18 beispielsweise ein einfaches Klettband oder auch ein anderes Band, welches an seinen Enden zwei Ösen aufweist, die um die Tragestange 10 bzw. die Achse 19 herumgelegt sind und wie dargestellt vernäht sind. Im Falle der Figur 11 b ist eine der Ösen bereits fest in das Band 18' integriert und das Band 18' hat auch eine größere Wandstärke und ist steifer, besteht z.B. aus einem halbsteifen Kunststoffmaterial, ähnlich der Konsistenz eines Lederbandes.

In Figur 11c ist ein im wesentlichen starres Scharnierelement 20 mit zwei Ösen 22, 23 dargestellt, wovon eine Öse 22 z.B. die Querstange 10' umgreift, während die andere Öse 23 die Achse 19 der beiden Längsrollen 11 umgreift.

Figur 11d zeigt schließlich ein weiteres starres Scharnierelement 21, das ebenso wie das Element 20 zwei Ösen 22, 23 aufweist, zusätzlich jedoch noch eine Öse 24 hat, durch die sich ebenfalls eine weitere Querstange erstrecken könnte, die als Handgriff dient, wenn eine entsprechende Tasche von den Schienen 13 abgenommen und in die J- oder C-förmigen Schienen für die Rollen 11 eingeschoben wird. Die zusätzlichen Handgriffe haben den Vorteil, daß die Hände des Benutzers nicht mit den mitunter scharfkantigen Stirnseiten der Schienen in Berührung kommen, da diese relativ dicht beieinander liegen.

Es versteht sich jedoch, daß ebensogut auch die Öse 23 den Handgriff aufnehmen könnte, während die Achse 19 sich beispielsweise durch die Ösen 24 erstrecken würde.

### Bezugszeichenliste

- 1: Aufnahmetasche
- 2: Bahn aus flexiblem Material
- 3: Halteschlaufen
- 4: Naht
- 5: U-förmige Einsätze
- 6: Tragestangen
- 7: Aufhängeeinrichtung
- 8: Gleithaken
- 9: Querrollen
- 10: Querstangen
- 11: Längsrollen
- 12: Kugel als Verdickung
- 13: Schiene als Haltemittel
- 14: Verdickung
- 15: Loch
- 16: Stift
- 17: Kastenschiene

## Patentansprüche

1. Vorrichtung zum Transportieren und/oder Aufbewahren von Stückgut mit einem Rahmen an welchem zwei in Abstand zueinander parallel angeordneten Schienen (13) befestigt sind, mit einer zusammenlegbaren Bahn (2) aus flexiblem Material, zum Beispiel Gewebematerial, die unter Bildung wenigstens einer im wesentlichen U-förmigen Aufnahmetasche (1) zusammengelegt ist, in welcher das Stückgut aufnehmbar ist, und mit einer am oberen Ende der Aufnahmetasche (1) angeordneten Aufhängeeinrichtung (7), die wenigstens eine mit dem oberen Ende der Aufnahmetasche (1) verbindbare und sich in Längsrichtung (X) über die Länge der Aufnahmetasche (1) hinweg erstreckende Tragestange (6) aufweist, deren Enden auf den Schienen (13) gehaltert sind, wobei die wenigstens eine Tragestange (6) mit ersten Mitteln zum verschiebbaren Führen der Aufnahmetasche (1) auf den Schienen (13) in einer ersten Richtung (Y) ausgebildet ist, **dadurch gekennzeichnet, dass** die wenigstens eine Tragstange (6) mit zweiten Mitteln zum verschiebbaren Führen der Aufnahmetasche (1) auf einem weiteren Schienenpaar in einer zu der ersten Richtung (Y) senkrechten zweiten Richtung (X) ausgebildet ist , wobei mindestens ein Teil dieser ersten und zweiten Mittel an den Enden der Tragestangen vorgesehen ist.

2. Vorrichtung nach Anspruch 1, **dadurch gekennzeichnet, daß** die ersten und zweiten Mittel im Bereich der Enden der wenigsten einen Tragstange (6) vorgesehen sind.

3. Vorrichtung nach Anspruch 1 oder 2, **dadurch gekennzeichnet, daß** die Aufhängeeinrichtung (7) wenigstens zwei Tragestangen (6) aufweist.

4. Vorrichtung nach Anspruch 3, **dadurch gekennzeichnet daß** der Abstand der beiden Tragenstangen (6) fest ist und durch je eine im Bereich des Stangenendes angeordnete Querstange (10) bestimmt ist.

5. Vorrichtung nach einem der Ansprüche 1 bis 4, **dadurch gekennzeichnet, daß** die ersten Mittel (8) zum verschiebbaren Führen der Aufnahmetasche (1) in der ersten Richtung (Y) an den Endbereichen der Tragestangen (6) angebrachte, nach unten offene Gleithaken (8) aufweisen.

6. Vorrichtung nach einem der Ansprüche 1 bis 5, **dadurch gekennzeichnet, daß** die zweiten Mittel (8) zum verschiebbaren Führen der Aufnahmetasche (1) in der zweiten Richtung (X) an den Endbereichen der Querstangen (6) angebrachte, nach unten offene Gleithaken (8) aufweisen.

7. Vorrichtung nach einem der Ansprüche 1 bis 4 und 6, **dadurch gekennzeichnet, daß** die ersten Mittel (11) zum verschiebbaren Führen der Aufnahmetasche (1) in der ersten Richtung (Y) an den Endbereichen der Querstangen (10) drehbar angeordnete Rollen (9) aufweisen.

8. Vorrichtung nach einem der Ansprüche 1 bis 5 und 7, **dadurch gekennzeichnet, daß** die zweiten Mittel (11) zum verschiebbaren Führen der Aufnahmetasche (1) in der zweiten Richtung (X) an den Endbereichen der Tragestangen (6) drehbar angeordnet Rollen (11) aufweisen.

9. Vorrichtung nach einem der Ansprüche 1 bis 4, **dadurch gekennzeichnet, daß** die ersten und zweiten Mittel nach unten offene Gleithaken (8) aufweisen.

10. Vorrichtung nach Anspruch 4, **dadurch gekennzeichnet, daß** die ersten und zweiten Mittel (9, 11) an den Tragestangen (6) und den Querstangen (10) drehbar angeordnete Rollen (9, 11) sind.

11. Vorrichtung nach einem der Ansprüche 1 bis 10, **dadurch gekennzeichnet, daß** die ersten oder zweiten Mittel Gleithaken (8), Laufrollen (9, 11), Verdickungen 14) oder dergleichen aufweisen.

12. Vorrichtung nach Anspruch 3, **dadurch gekennzeichnet, daß** die beiden Tragestangen (6) durch mindestens eine im Abstand zu den Enden der Tragestangen angeordnete Querstange (10') miteinander verbunden sind.

13. Vorrichtung nach Anspruch 12, **dadurch gekennzeichnet, daß** an der Querstange (10') mindestens ein sich quer von der Querstange (10') weg erstreckendes Scharnierelement (18. 18'. 20, 21) vorgesehen ist, welches um die Querstange (10') drehbeweglich ist und welches in einem von der Querstange (10') beabstandeten Bereich mindestens eine Öse (23) zur Aufnahme einer Achse aufweist, an welcher Mittel zum Verschieben der Aufnahmetasche in Längsrichtung der Tragestangen (6) angebracht sind.

14. Vorrichtung nach Anspruch 13, **dadurch gekennzeichnet, daß** die Mittel zum Bewegen der Aufnahmetaschen (1) in Längsrichtung Längsrollen (11) sind.

15. Vorrichtung nach Anspruch 14, **dadurch gekennzeichnet, daß** das mindestens eine Schamierelement (18, 18') aus einem flexiblen Streifenmaterial besteht.

16. Vorrichtung nach Anspruch 14, **dadurch gekennzeichnet, daß** das mindestens eine Scharnierelement aus einem halbsteifen oder starren Material besteht.

17. Vorrichtung nach einem der Ansprüche 14 bis 16, **dadurch gekennzeichnet, daß** das mindestens eine Scharnierelement mindestens zwei Ösen (22, 23) aufweist, von welchen eine zur Aufnahme der Querstange (10') und eine andere zur Aufnahme der Achse (19) vorgesehen ist.

18. Vorrichtung nach Anspruch 17, **dadurch gekennzeichnet, daß** das mindestens eine Scharnierelement (21) eine dritte Öse (24) im Abstand zur Querstange (10') aufweist, welche für die Aufnahme eines Handgriffs vorgesehen ist.

19. Vorrichtung nach einem der Ansprüche 12 bis 18, **dadurch gekennzeichnet, daß** an der Querstange (10') jeweils zwei Scharnierelemente (18, 18', 20, 21) parallel und im Abstand zueinander angeordnet sind.

20. Vorrichtung zum Transportieren und/oder Aufbewahren von Stückgut mit einem Rahmen an welchem zwei in Abstand zueinander parallel angeordneten Schienen (13) befestigt sind, mit einer zusammenlegbaren Bahn (2) aus flexiblem Material, zum Beispiel Gewebematerial, die unter Bildung wenigstens einer im wesentlichen U-förmigen Aufnahmetasche (1) zusammengelegt Ist, in welcher das Stückgut aufnehmbar ist, und mit einer am oberen Ende der Aufnahmetasche (1) angeordneten Aufhängeeinrichtung (7), die eine mit dem oberen Ende der Aufnahmetasche (1) verbindbare und sich in Längsrichtung (X) über die Länge der Aufnahmetasche (1) hinweg erstreckende Tragestange (6) aufweist, deren Enden auf den Schienen (13) gehaltert sind, **dadurch gekennzeichnet, dass** an der Tragestange (6) oben wenigstens eine Verdickung (12), z.B. eine Kugel, zum verschiebbaren Führen der Aufnahmetasche (1) in einer Kastenschiene (17) angebracht ist.

21. Vorrichtung nach Anspruch 20, **dadurch gekennzeichnet, dass** die Tragestange (6) an mindestens einem ihrer Enden mit Mitteln zum Verschiebbaren Führen der Aufnahmetasche (1) auf einer der parallelen Schienen (13) vorgesehen ist.

## Claims

1. Device for transporting and/or storing piece goods, comprising a frame to which are fixed two rails (13) arranged in parallel to one another at a distance apart, comprising a foldable web (2), which is made of flexible material, e.g. woven material, and which is folded while forming at least one essentially U-shaped holding pouch (1), in which the piece good can be held, and comprising a suspending device (7), which is situated at the upper end of the holding pouch (1) and which has at least one supporting bar (6), which can be connected to the upper end of the holding pouch (1), extends away in a longitudinal direction (X) over the length of the holding pouch (1), and whose ends are held onto the rails (13), wherein the at least one supporting bar (6) is designed with first means for displaceably guiding the holding pouch (1) on the rails (13) in a first direction (Y), **characterised in that** the at least one supporting bar (6) is designed with second means for displaceably guiding the holding pouch (1) on a further pair of rails in a second direction (X) perpendicular to the first direction (Y), wherein at least a portion of the first and second means is provided at the ends of the supporting bars.

2. Device according to Claim 1, **characterized in that** the first and second means are provided in the region of the ends of the at least one supporting bar (6).

3. Device according to either of Claims 1 or 2, **characterized in that** the suspending device (7) has at least two supporting bars (6).

4. Device according to Claim 3, **characterized in that** the distance between the two supporting bars (6) is fixed, and determined by a respective transverse bar (10) arranged in the region of the bar end.

5. Device according to any one of Claims 1 to 4, **characterized in that** the first means (8) for displaceably guiding the holding pouch (1) in the first direction (Y) have downwardly open slide hooks (8) mounted at the end regions of the supporting bars (6).

6. Device according to any one of Claims 1 to 5, **characterized in that** the second means (8) for displaceably guiding the holding pouch (1) in the second direction (X) have downwardly open slide hooks (8) arranged at the end regions of the transverse bars (6).

7. Device according to any one of Claims 1 to 4 and 6, **characterized in that** the first means (11) for displaceably guiding the holding pouch (1) in the first direction (Y) have rollers (9) rotatably arranged at the end regions of the transverse bars (10).

8. Device according to any one of Claims 1 to 5 and 7, **characterized in that** the second means (11) for displaceably guiding the holding pouch (1) in the second direction (X) have rollers (11) rotatably arranged at the end regions of the supporting bars (6).

9. Device according to any one of Claims 1 to 4, **characterized in that** the first and second means have downwardly open slide hooks (8).

10. Device according to Claim 4, **characterized in that** the first and second means (9, 11) are rollers (9, 11) rotatably arranged on the supporting bars (6) and on the transverse bars (10).

11. Device according to any one of Claims 1 to 10, **characterized in that** the first and second means have slide hooks (8), rollers (9, 11), enlargements (14) or the like.

12. Device according to Claim 3, **characterized in that** the two supporting bars (6) are connected to one another by at least one transverse bar (10') arranged at a distance from the ends of the supporting bars.

13. Device according to Claim 12, **characterized in that** there is provided on the transverse bar (10') at least one hinge element (18, 18', 20, 21), which extends transversely away from the transverse bar (10'), and which is rotatably mobile about the transverse bar (10') and has, in a region at a distance from the transverse bar (10'), at least one eyelet (23) for receiving an axle on which are mounted means for displacing the holding pouch in the longitudinal direction of the supporting bars (6).

14. Device according to Claim 13, **characterized in that** the means for moving the holding pouches (1) in the longitudinal direction are longitudinal rollers (11).

15. Device according to Claim 14, **characterized in that** the at least one hinge element (18, 18') is composed of a flexible strip material.

16. Device according to Claim 14, **characterized in that** the at least one hinge element is composed of a semi-rigid or rigid material.

17. Device according to any one of Claims 14 to 16, **characterized in that** the at least one hinge element has at least two eyelets (22, 23), of which one is provided for receiving the transverse bar (10') and another is provided for receiving the axle (19).

18. Device according to Claim 17, **characterized in that** the at least one hinge element (21) has a third eyelet (24) which is at a distance from the transverse bar (10') and which is provided for receiving a handle.

19. Device according to one of Claims 12 to 18, **characterized in that** respectively two hinge elements (18, 18', 20, 21), parallel to and at a distance from one another, are provided on the transverse bar (10').

20. Device for transporting and/or storing piece goods, comprising a frame to which are fixed two rails (13) arranged in parallel to one another at a distance apart, comprising a foldable web (2), which is made of flexible material, e.g. woven material, and which is folded to form at least one essentially U-shaped holding pouch (1), in which the piece good can be held, and comprising a suspending device (7), which is situated at the upper end of the holding pouch (1) and which has a supporting bar (6), which can be connected to the upper end of the holding pouch (1), extends away in a longitudinal direction (X) over the length of the holding pouch (1), and whose ends are held onto the rails (13), **characterized in that** the top of the separating bar (6) has at least one enlargement (12), for example a ball, to displaceably guide the suspending device (1) in a box rail (17).

21. Device according to claim 20, **characterized in that** at least one end of the supporting bar (6) is provided with means for displaceably guiding the holding pouch (1) on one of the parallel rails (13).

## Revendications

1. Dispositif de transport et/ou de stockage d'une marchandise de détail, lequel dispositif comporte un cadre auquel sont fixés deux glissières (13) disposées parallèlement à distance l'une de l'autre, une bande pliable (2) en matériau flexible, par exemple en tissu, qui est pliée en formant au moins une poche de réception (1) sensiblement en U dans laquelle la marchandise de détail peut être reçue, et un dispositif de suspension (7) qui est disposé à l'extrémité supérieure de la poche de réception (1) et qui comporte au moins une barre de support (6) qui peut être reliée à l'extrémité supérieure de la poche de réception (1), qui s'étend dans une direction longitudinale (X) au-delà de la longueur de la poche de réception (1) et dont les extrémités sont supportées par les glissières (13), une barre de support (6) au moins étant conformée avec des premiers moyens permettant de guider en translation la poche de réception (1) par les glissières (13) dans une première direction (Y), **caractérisé en ce qu'**une barre de support (6) au moins est conformée avec des deuxièmes moyens permettant de guider en translation la poche de réception (1) placée sur une autre paire de glissières dans une deuxième direction (X) perpendiculaire à la première direction (Y), au moins une partie de ces premiers et deuxièmes moyens étant disposée aux extrémités des barres de support.

2. Dispositif selon la revendication 1, **caractérisé en ce que** les premiers et deuxièmes moyens sont disposés dans la région des extrémités de la barre de support (6) au moins.

3. Dispositif selon la revendication 1 ou 2, **caractérisé en ce que** le dispositif de suspension (7) comporte au moins deux barres de support (6).

4. Dispositif selon la revendications 3, **caractérisé en ce que** la distance entre les deux barres de support (6) est fixe et est déterminée par une traverse (10) placée dans la région de chaque extrémité des barres.

5. Dispositif selon l'une des revendications 1 à 4, **caractérisé en ce que** les premiers moyens (8) destinés à guider en translation la poche de réception (1) dans une direction (Y) comportent des crochets glissants (8) ouverts vers le bas et montés au niveau des régions d'extrémité des barres de support (6).

6. Dispositif selon l'une des revendications 1 à 5, **caractérisé en ce que** les deuxièmes moyens (8) destinés à guider en translation la poche de réception (1) dans une direction (X) comportent des crochets glissants (8) ouverts vers le bas et montés au niveau des régions d'extrémité des traverses (8).

7. Dispositif selon l'une des revendications 1 à 4 et 6, **caractérisé en ce que** les premiers moyens (11) destinés à guider en translation la poche de réception (1) dans une direction (Y) comportent des galets (9) disposés à rotation au niveau des régions d'extrémité des traverses (10).

8. Dispositif selon l'une des revendications 1 à 5 et 7, **caractérisé en ce que** les deuxièmes moyens (11) destinés à guider en translation la poche de réception (1) dans une deuxième direction (X) comportent des galets (11) disposés à rotation au niveau des régions d'extrémité des barres de support (6).

9. Dispositif selon l'une des revendications 1 à 4, **caractérisé en ce que** les premiers et deuxièmes moyens comportent des crochets glissants (8) ouverts vers le bas.

10. Dispositif selon la revendication 4, **caractérisé en ce que** les premiers et deuxièmes moyens (9, 11) sont des galets (9, 11) disposés à rotation sur les barres de support (6) et les traverses (10).

11. Dispositif selon l'une des revendications 1 à 10, **caractérisé en ce que** les premiers ou deuxièmes moyens comportent des crochets glissants (8), des galets de roulement (9, 11), des renflements (14) ou analogues.

12. Dispositif selon la revendication 3, **caractérisé en ce que** les deux barres de support (6) sont reliées par au moins une traverse (10') disposée à distance des extrémités des barres de support.

13. Dispositif selon la revendication 12, **caractérisé en ce qu'**il comporte au niveau de la traverse (10') au moins un élément de charnière (18, 18', 20, 21), s'étendant transversalement depuis la traverse (10'), qui est mobile en rotation autour de la traverse (10') et qui comporte dans une région à distance de la traverse (10') au moins un oeil (23) destiné à recevoir un axe sur lequel sont montés des moyens permettant de déplacer en translation la poche de réception dans une direction longitudinale des barres de support (6).

14. Dispositif selon la revendication 13, **caractérisé en ce que** les moyens de déplacement des poches de réception (1) dans une direction longitudinale sont des galets longitudinaux (11).

15. Dispositif selon la revendication 14, **caractérisé en ce qu'**au moins un élément de charnière (18, 18') est constitué d'une bande de matière flexible.

16. Dispositif selon la revendication 14, **caractérisé en ce que** l'élément de charnière au moins est en un matériau rigide ou semi-rigide.

17. Dispositif selon l'une des revendications 14 à 16, **caractérisé en ce que** l'élément de charnière au moins comporte au moins deux oeils (22, 23) dont l'un est destiné à recevoir la traverse (10') et dont l'autre est destiné à recevoir l'axe (19).

18. Dispositif selon la revendication 17, **caractérisé en ce que** l'élément de charnière (21) au moins comporte un troisième oeil (24) qui est situé à distance de la traverse (10') et qui est destiné à recevoir une poignée.

19. Dispositif selon l'une des revendications 12 à 18, **caractérisé en ce que** deux éléments de charnière (18, 18', 20, 21) sont disposés parallèlement à distance l'un de l'autre au niveau de chaque traverse (10').

20. Dispositif de transport et/ou de stockage d'une marchandise de détail, lequel dispositif comporte un cadre auquel sont fixés deux glissières (13) disposées parallèlement à distance l'une de l'autre, une bande pliable (2) en matériau flexible, par exemple en tissu, qui est pliée en formant au moins une poche de réception (1) sensiblement en U dans laquelle la marchandise de détail peut être reçue, et un dispositif de suspension (7) qui est disposé à l'extrémité supérieure de la poche de réception (1) et qui comporte au moins une barre de support (6) qui peut être reliée à l'extrémité supérieure de la poche de réception (1), qui s'étend dans une direction longitudinale (X) au-delà de la longueur de la poche de réception (1) et dont les extrémités sont supportées par les glissières (13), **caractérisé en ce qu'**au moins un renflement (12), par exemple une bille, est monté en haut sur la barre de support (6) et sert à guider en translation la poche de réception (1) dans une glissière de section rectangulaire (17).

21. Dispositif selon la revendication 20, **caractérisé en ce que** la barre de support (6) est dotée, à au moins une de ses extrémités, de moyens de guidage en translation de la poche de réception (1) sur l'une des glissières parallèles (13).
